# EUROPÄISCHE PATENTSCHRIFT

(11) **EP 1 182 934 B1**
(45) Veröffentlichungstag und Bekanntmachung des Hinweises auf die Patenterteilung: **27.07.2005**
(21) Anmeldenummer: 00935139.6
(22) Anmeldetag: 29.05.2000
(51) Int. Cl.: A23C 1/00

(54) **VERFAHREN UND VORRICHTUNG ZUR BEHANDLUNG VON MILCH, INSBESONDERE VON MUTTERMILCH**
METHOD AND DEVICE FOR TREATING MILK, ESPECIALLY BREAST MILK
PROCEDE ET DISPOSITIF DE TRAITEMENT DE LAIT, NOTAMMENT DU LAIT MATERNEL

(30) Priorität: 04.06.1999 DE 19925497; 25.06.1999 DE 19929130
(43) Veröffentlichungstag der Anmeldung: 06.03.2002
(73) Patentinhaber: Eberhard-Karls-Universität Tübingen Universitätsklinikum, 72076 Tübingen (DE)
(72) Erfinder: JAHN, Gerhard, D-72108 Rottenburg (DE); SPEER, Christian, P., D-72070 Tübingen (DE); MASCHMANN, Jens, D-72127 Kusterdingen-Jettenburg (DE); HAMPRECHT, Klaus, D-72074 Tübingen (DE); LAUF, Klaus, D-72072 Tübingen (DE)
(74) Vertreter: Otten, Hajo, Dr.-Ing.
(86) Internationale Anmeldenummer: PCT/EP2000/004880
(87) Internationale Veröffentlichungsnummer: WO 2000/074494

(56) Entgegenhaltungen:
- DE-C- 480 452
- FR-A- 2 500 948
- GB-A- 634 434
- GB-A- 655 198
- DATABASE WPI Section Ch, Week 199406 Derwent Publications Ltd., London, GB; Class D13, AN 1994-046406 XP002152882 & RU 2 000 058 C (KVASENKOV O I), 7. September 1993 (1993-09-07)
- DHAR J ET AL: "Pasteurization efficiency of a HTST system for human milk." JOURNAL OF FOOD SCIENCE, Bd. 61, Nr. 3, 1996, Seiten 569-572, 595, XP002152880 ISSN: 0022-1147
- DATABASE FSTA [Online] INTERNATIONAL FOOD INFORMATION SERVICE (IFIS), FRANFURT/MAIN, DE; FORSUM E ET AL: "Protein evaluation in growing rats of breast milk and breast milk substitutes with special reference to the content of non-protein nitrogen." Database accession no. 80-4-01-p0169 XP002152881 & JOURNAL OF NUTRITION 1979 INST. OF NUTR., UNIV. OF UPPSALA, BOX 551, S-751 22, UPPSALA, SWEDEN, Bd. 109, Nr. 2, Seiten 185-192,

## Beschreibung

Die vorliegende Erfindung betrifft ein Verfahren zur Behandlung von Milch, insbesondere von Muttermilch, bei dem die Milch in einem Behälter kurzzeitig erhitzt wird.

Die Erfindung betrifft ferner eine Vorrichtung zur Durchführung dieses Verfahrens.

Derartige Verfahren und Vorrichtungen sind allgemein aus dem Stand der Technik bekannt. Sie dienen dazu, zur Lagerung oder späteren Verwendung bestimmte Milch oder Muttermilch haltbar zu machen und/oder infektiöse Mikroorganismen aus der Milch zu entfernen. Derartige Verfahren sind z.B. unter dem Begriff Pasteurisierung bekannt.

Es ist inzwischen allgemein anerkannt, daß die Ernährung mit Muttermilch für einen Säugling nicht nur Vorteile bezüglich der Ernährung selbst, sondern auch immunologische Vorteile bietet, denn die Muttermilch enthält neben Eiweiß, Fett und Kohlenhydraten unter anderem die Inhibine Lysozym, Laktoferrin, Neuraminsäure und spezifische Immunglobuline, vor allem sIgA. Aus diesem Grund sind gestillte Kinder gegenüber Infektionen und Allergenen in geringerem Maße anfällig als nicht gestillte Kinder.

Gerade für Frühgeborene hat daher die Ernährung mit Muttermilch so große Vorteile, daß unter anderem aus diesem Grund in den 80er Jahren Milchbanken eingerichtet wurden, in denen Muttermilch aufbereitet und für eine spätere Verwendung gelagert wurde. Die Milch verschiedener Spenderinnen wurde dazu gepoolt und dann einer Hitzeinaktivierung bzw. einer Kryoinaktivierung unterzogen. Aus Sicherheitsgründen ist das System der Milchbanken heute weitgehend wieder aufgegeben worden, da zur Vermeidung von Infektionen eine eindeutige Zuordnung zwischen dem Säugling und der Muttermilch der eigenen Mutter unabdingbar ist. Auf diese Weise soll eine unkontrollierte Übertragung von Infektionskrankheiten wie HIV, Hepatitis etc. vermieden werden.

Für die Ernährung von Frühgeborenen bedeutet dies nun jedoch, daß die Muttermilch der eigenen Mutter abgepumpt, aufbereitet und im Krankenhaus und/oder zuhause zwischengelagert werden muß, denn aufgrund der Unreife und der geringen Nahrungsaufnahmekapazität und der damit verbundenen häufigen Fütterung können diese Frühgeborenen nicht gestillt werden. Hinzu kommt, daß Frühgeborene häufig drei bis vier Monate in der Klinik verbleiben, während die Mütter schon kurze Zeit nach der Geburt entlassen werden, so daß im Krankenhaus entsprechende Vorräte an Muttermilch vorhanden sein müssen, um eine kontinuierliche Ernährung der Frühgeborenen sicherzustellen. Technisch bedeutet dies, daß auch kleine Volumina von z.B. 20 ml aufbereitet und individuell gelagert werden müssen.

Während durch Verzicht auf Stillen die vertikale Transmission von HIV, Hepatitis und weiteren Infektionskrankheiten beherrschbar geworden ist, gilt dies nicht für Infektionen mit dem Zytomegalie-Virus (im folgenden: CMV), die gegenwärtig zur häufigsten Pränatalinfektion zählt. Bei ca. 10 - 20 % aller Neugeborenen kommt es darüber hinaus zu einer perinatalen Infektion durch Muttermilch. Der Krankheitsverlauf kann sehr schwer und insbesondere bei Frühgeborenen letal sein.

Vochem et al., Transmission of cytomegalovirus to preterm infants through breast milk, Pediatr Infect Dis J, 1998, Band 17, Seiten 53-58, berichten in diesem Zusammenhang über eine klinische Studie, in der das Risiko der Übertragung von CMV durch Muttermilch auf Kinder mit einem Geburtsgewicht unterhalb 1500 g oder einem Schwangerschaftsalter von weniger als 32 Wochen untersucht wurde. Ca. 50 % der Mütter waren CMVseropositiv, wobei 85 % dieser seropositiven Mütter CMV über die Muttermilch absonderten, wie durch eine Untersuchung der zellfreien Molke nachgewiesen werden konnte. Im Laufe der Studie infizierte sich mehr als die Hälfte der von CMV-seropositiven Müttern gestillten Frühgeborenen mit CMV.

Aufgrund der Tatsache, daß die Autoren infizierte Muttermilch als einzige Quelle für die Übertragung von CMV identifizieren konnten, schlagen sie vor, CMV in abgepumpter Muttermilch zu inaktivieren, um die Übertragung zu verhindern und eine frühe und damit häufige symptomatische Infektion bei Frühgeborenen zu vermeiden.

Neben den klassischen Methoden der Holder-Pasteurisierung und der Kryoinaktivierung schlagen die Autoren vor, infizierte Muttermilch kurzzeitig für zehn Sekunden auf 72°C zu erhitzen, ohne jedoch das von ihnen angewandte Verfahren genau zu beschreiben. Sie berichten, daß sie nach einer derartigen Kurzzeiterhitzung keine Spuren von infektiösen Viren mehr nachweisen konnten.

In einer frühen Studie beschreiben Goldblum et al., Rapid hightemperature treatment of human milk, The Journal of Pediatrics, 1984, Band 104, Seiten 380-385, eine Kurzzeit-Pasteurisierung von Muttermilch, durch die die Zahl von Bakterien und CMV stark reduziert wurde, ohne viele der für die Immunologie und Ernährung wichtigen Inhaltsstoffe zu zerstören. Gemäß dem bekannten Verfahren wird Milch von mehreren Spenderinnen gepoolt (1,2 bis 2 l) und mittels eines Plattenwärmetauschers aufgeheizt. Da der Wärmetauscher für die Behandlung großer Volumina von Kuhmilch ausgelegt war, wurde die gepoolte Humanmilch in einen kontinuierlichen Strom von sterilem destilliertem Wasser injiziert und für fünf Sekunden auf 72°C erhitzt, wobei die gewünschte Temperatur in weniger als drei Sekunden erreicht wurde. Anschließend wurden die Proben innerhalb von drei Sekunden auf 2°C abgekühlt.

Wegen der Verwendung eines in der Milchindustrie üblichen Gerätes mit dem erforderlichen hohen Pröbenvolumen wird das bekannte Verfahren den eingangs erwähnten modernen Anforderungen nach der Behandlung kleiner Probenvolumina nicht gerecht.

In einer weiteren frühen Arbeit berichten Dworsky et al., Persistence of cytomegalovirus in human milk after storage, The Journal of Pediatrics, 1982, Band 101, Seiten 440-443, daß eine Holder-Pasteurisierung, also eine Erhitzung der Milch für 30 Minuten auf 62°C zu einer vollständigen Eliminierung von CMV in CMV-seropositiver Milch führt. Sie erwähnen jedoch, daß diese Behandlung nicht ideal ist, wenn die immunologischen Eigenschaften der Milch erhalten werden sollen. Die daher untersuchte Pasteurisierung mit einer niedrigeren Temperatur, nämlich 56°C, zeigte jedoch keine zufriedenstellende Eliminierung von CMV aus infizierter Milch.

Ebenfalls nicht zufriedenstellende Ergebnisse erzielten die Autoren mit einer Kryoinaktivierung, bei der die Proben über nacht bei -20°C gelagert wurden.

Ebenfalls unbefriedigende Resultate werden bei Verwendung von W-Strahlungsguellen als Sterilisationsprinzip erzielt, wie dies beispielsweise bei Vorrichtungen beschrieben ist, die aus den FR 2 500 948 und GB 655,198 bekannt sind.

Aus der GB 634,434 ist eine Vorrichtung bekannt, die sich für die Wärmebehandlung von Kuhmilch in großmaßstablicher Anwendung, z.B. in industriellen Molkereien, eignet. Bei dieser bekannten technisch äußerst aufwendig konstruierten Vorrichtung wird eine zufriedenstellende Sterilisation auch nur bei langzeitlicher Erwärmung sichergestellt, was den Nährwert der Milch beträchtlich schmälert.

Artamonov et al. (1994), "Liquid Product Sterile Food Industrial Medicine Increase Efficiency Centrifuge Formation Film Product Bubble Steam Through Obtain Film Liquid Reduce Average Temperature Power Require", Derwent Publications Ltd., London, GB, Abstract, XP 002152882, beschreiben ein Verfahren zur Sterilisation von Flüssigkeiten, bei dem während der Zentrifugation der zu behandelnden Flüssigkeit eine Beaufschlagung mit heißem Wasserdampf erfolgt. Dieses Prinzip ist wegen auftretender Sterilitäts- und Verdünnungsprobleme für die beabsichtigten Zwecke völlig ungeeignet.

Die DE 480 452 beschreibt ein Verfahren und eine entsprechende Vorrichtung zum Sterilisieren von Milch, die sich ausschließlich für großmaßstabliche Zwecke eignet. Bei dieser bekannten Vorrichtung werden praktisch vollgefüllte Gefäße wärmebehandelt, so daß sich regelmäßig Temperaturgradienten ausbilden, deshalb eine langzeitliche Wärmebehandlung mit entsprechend temperiertem Wasser vorgesehen ist, was mit den vorstehend beschriebenen Nachteilen verbunden ist.

Dhar et al. (1996) "Pasteurisation Efficiency of a HTST System for Human Milk", Journal of Food Science, Vol. 61, Nr. 3, Seite 569 ff. beschreiben ein äußerst aufwendiges Verfahren und eine entsprechende Vorrichtung zum Pasteurisieren von Muttermilch, bei denen die Milch durch dünne Stahlrohre gepumpt wird, die durch ein Bad mit heißem Wasser verlaufen. Die Milch wird anschließend nach ihrem Austreten aus dem Rohr in eisgekühlten Probenbehältern aufgefangen. Auch eine solche Vorrichtung ist auf Grund ihrer technisch aufwendigen Konstruktion für die beabsichtigten Zwecke ungeeignet. Ferner wird auch bei diesem Verfahren die Milch über eine längere Zeit erwärmt, was zu einer Verschlechterung der Qualität der Milch führt.

Forsum et al. (1979), "Protein Evaluation in Growing Rates of Breast Milk and Breast Milk Substitutes with Special Reference to the Content of Non-Protein Nitrogene", Journal of Nutrition, Vol. 109, Nr. 2, Seiten 185 bis 192 beschreiben eine vergleichende Studie über die Proteinqualität von Muttermilch und kommerziell erwerblicher Nährlösung. Diesem Dokument ist die Angabe zu entnehmen, daß bei den dortigen Untersuchungen die Muttermilch bei 72°C für 15 bis 30 Sekunden pasteurisiert wurde, wobei jedoch nähere Ausführungen über die Art und Weise, wie die Milch technisch behandelt wurde, nicht zu entnehmen sind.

Vor diesem Hintergrund ist es Aufgabe der vorliegenden Erfindung, das eingangs erwähnte Verfahren sowie die eingangs erwähnte Vorrichtung dahingehend weiterzubilden, daß die Milch auf einfach und schnell durchzuführende Weise auch in kleinen Mengen derart behandelt werden kann, daß infektiöse Mikroorganismen, insbesondere CMV, zuverlässig inaktiviert werden, wobei die erwünschten Inhaltsstoffe vorzugsweise größtenteils erhalten bleiben.

Diese Aufgabe wird durch die gegenstände gemäß den unabhängigen Ansprüchen 1 und 14 gelöst.

Bei dem eingangs erwähnten Verfahren, bei dem der Behälter zumindest während des Erhitzens derart in Bewegung gesetzt wird, daß sich an seiner Innenwand ein Milchfilm ausbildet, der Behälter/die Milch zum Aufheizen für eine erste Zeitspanne einer auf eine erste Temperatur eingestellten ersten Wärmequelle, dann für eine zweite Zeitspanne einer auf einer zweiten Temperatur befindlichen zweiten Wärmequelle und schließlich zum Abkühlen für eine dritte Zeitspanne einer auf eine dritte Temperatur eingestellten dritten Wärmequelle ausgesetzt wird, wird diese Aufgabe erfindungsgemäß dadurch gelöst, dass die erste Wärmequelle durch eine Heißluftquelle gebildet wird.

Bei der eingangs erwähnten Vorrichtung mit zumindest einer Wärmequelle zum Aufheizen der Milch sowie einer Vorrichtung, um den Behälter in Bewegung, vorzugsweise in Rotation zu versetzen und den sich bewegenden Behälter der Wärmequelle für eine bestimmte Zeitspanne auszusetzen, einer weiteren Wärmequelle zum Abkühlen der Milch wird diese Aufgabe erfindungsgemäß dadurch gelöst, daß die erste Wärmequelle durch eine Heißluftquelle gebildet ist.

Die der Erfindung zugrundeliegende Aufgabe wird auf diese Weise vollkommen gelöst.

Die Erfinder der vorliegenden Anmeldung haben erkannt, daß durch die Bewegung des Behälters während der Hitzeeinwirkung die Entstehung von internen Temperaturgradienten verhindert wird, da das gesamte Milchvolumen gleichmäßig erhitzt wird. Dies bedeutet jedoch, daß keine Denaturierung von Inhaltsstoffen stattfindet und ein Großteil der immunologischen Eigenschaften der Milch erhalten bleibt. Andererseits konnten die Erfinder eine vollständige Inaktivierung von infektiösen Mikroorganismen, insbesondere von CMV sowie auch von z.B. Staphylococcus aureus feststellen. Auch ein Einsatz im Veterinärbereich z.B. in zoologischen Gärten und bei seltenen Säugetieren ist möglich.

Das neue Verfahren sowie die neue Vorrichtung sind darüber hinaus besonders für sehr kleine Milchmengen geeignet, denn eine lokale Überhitzung der Milch wird durch die Bewegung des Behälters verhindert.

Dabei wird der Behälter zumindest während des Erhitzens vorzugsweise in Rotation versetzt mit einer Drehzahl oberhalb von ca. 150 U/min, vorzugsweise oberhalb von ca. 250 U/min, weiter vorzugsweise von ca. 300 U/min.

Die Erfinder haben festgestellt, daß derartige Rotationsgeschwindigkeiten zur Ausbildung eines sehr gleichmäßigen Milchfilmes an der Innenseite des Behälters führen, wobei die eingesetzten Temperaturen und Zeiten für eine garantierte Eliminierung selbst hoher Virusdosen in kleinen individuellen Milchmengen sorgen.

Zwar wäre es auch möglich, die Milch in dem Behälter durch Rühren selbst in Bewegung zu versetzen, die mechanische Agitation der Milch könnte jedoch zu einer Zerstörung der Milchzellen-Struktur führen, was bei einer Bewegung, vorzugsweise Rotation des Behälters, so nicht der Fall ist.

Der Behälter/die Muttermilch wird zum Aufheizen für eine erste Zeitspanne einer auf eine erste Temperatur eingestellten ersten Wärmequelle, dann für eine zweite Zeitspanne einer auf einer zweiten Temperatur befindlichen zweiten Wärmequelle und schließlich zum Abkühlen für eine dritte Zeitspanne einer auf eine dritte Temperatur eingestellten dritten Wärmequelle ausgesetzt.

Hierbei ist von Vorteil, daß sich die Aufheiz- und Abkühlgeschwindigkeit der Milch individuell so einstellen läßt, daß eine Denaturierung von Inhaltsstoffen durch sprungartige Temperaturänderungen vermieden wird. Auf optimale Weise ist so eine langsame Anwärmphase wählbar, die auch bei kleinen Milchmengen für eine schonende und gleichmäßige Aufheizung sorgt.

Dabei ist es besonders bevorzugt, wenn die dritte Wärmequelle durch ein gekühltes Wasserbad gebildet wird.

Auch diese Maßnahme sorgt für eine gleichmäßige Temperatur in der behandelten Milch. Zwar wäre es auch denkbar, die Milch über Kühl-/Heizschlangen zu temperieren, insbesondere bei kleinen Milchmengen würde dies jedoch zu lokalen Temperaturgradienten und damit zu einer Denaturierung von Inhaltsstoffen führen. Darüber hinaus sind Kühl-/Heizschlangen schwer zu sterilisieren, wobei dieses Problem bei den nur außen mit den Behältern in Kontakt gelangenden Wasserbädern nicht auftritt.

Erfindungsgemäß ist die erste Wärmequelle eine Heißluftquelle, in deren Luftstrahl der bewegte Behälter eingetaucht wird, wobei vorzugsweise der Luftstrahl in eine Kammer mit einer Öffnung zum Eintauchen des bewegten Behälters geleitet wird. Der Behälter wird so in ein Luftbad eingetaucht.

Auf diese Weise läßt sich eine gleichmäßige Temperatur in der behandelten Milch erzeugen. Im einfachsten Falle ist die Heißluftquelle eine Luftquelle, beispielsweise ein Gebläse, dessen Luftstrahl längs eines Heizwiderstandes geleitet wird. In ähnlichem Aufbau kann als dritte Wärmequelle eine Kaltluftquelle vorgesehen sein, die ein Gebläse umfaßt, dessen Luftstrahl über z.B. ein Pelltierelement geleitet wird, ein Halbleiterelement, das durch Beaufschlagung mit Strom an einer Seite tiefe Temperaturen erzeugt. Wenn statt Wasserbäder Luftquellen verwendet werden, wird das Problem des tropfenden Wassers beseitigt, das der aus dem jeweiligen Wasserbad ausgehobene Behälter "mitschleppt". Dabei ist es besonders bevorzugt, wenn die erste Wärmequelle durch eine Heißluftquelle und die dritte Wärmequelle durch ein gekühltes Wasserbad gebildet wird.

Weiter ist es bevorzugt, wenn die zweite Wärmequelle die Umgebungsluft ist.

Diese Maßnahme ist konstruktiv von Vorteil, denn auf ein drittes Wasserbad kann nach Erkenntnis der Erfinder verzichtet werden, so daß das neue Verfahren in einer Vorrichtung mit lediglich zwei Wasserbädern durchgeführt werden kann.

Die Erfinder der vorliegenden Anmeldung haben erkannt, daß bei Anwendung des erfindungsgemäßen Verfahrens nicht nur die Eliminierung selbst sehr hoher Virusdosen in kleinen Milchmengen von 20 ml ermöglicht wird, sondern daß die weitgehende strukturelle Integrität der Milchzellen gewährleistet werden kann, was durch mikroskopische Prüfung mittels Vitalfärbung und LDH-Freisetzung in Molke nachgewiesen wurde. Ferner zeigt das neue Verfahren keine Reduktion des Gesamteiweisses und des Albumins in der Molke an. Zwar ist die Aktivität der Alkalischen Phosphatase und der Lipase temperatursensitiv, die Lipaseaktivität, der eine Schlüsselrolle bei der Fettresorption im Frühgeborenenintestinum zugeschrieben wird, ist bei dem neuen Verfahren jedoch um ca. den Faktor 3 größer als nach einer Holder-Pasteurisierung (30 Minuten, 62°C). Darüber hinaus wird die Konzentration der Vitamine B12 und Folsäure nicht reduziert, wobei ferner die Konzentration von sIgA nur geringfügig reduziert wird.

Insgesamt bedeutet dies, daß im Gegensatz zu den aus der Literatur bekannten Verfahren durch das neue Verfahren auch kleine Mengen an Milch auf sehr schnelle, aber dennoch schonende Weise zuverlässig so aufbereitet werden können, daß eine vollständige Inaktivierung insbesondere von CMV erfolgt, wichtige Inhaltsstoffe jedoch erhalten und größtenteils aktiv bleiben.

Dabei ist es dann noch bevorzugt, wenn der Behälter ein Glaskolben, vorzugsweise ein Glasrundkolben ist.

Hier ist von Vorteil, daß derartige Glaskolben leicht zu sterilisieren und preiswert sind, wobei ferner aufgrund der begrenzten Wärmeleitfähigkeit des Glases ein lokales Aufheizen der aufgenommenen Milch beim Eintauchen in ein Heizbad verhindert wird, was ebenfalls auf vorteilhafte Weise eine unerwünschte Denaturierung gerade bei kleinen Milchmengen vermeidet.

Weiter ist es noch bevorzugt, wenn der Behälter ein Volumen aufweist, das mindestens ca. zehnmal größer ist als das Volumen der Milch.

Hier ist von Vorteil, daß sich insbesondere in einem rotierenden Behälter bei derartigen Volumenverhältnissen ein gleichmäßiger, günstig verteilter Milchfilm ausbildet, der die beschriebene zuverlässige Inaktivierung unter Beibehaltung der Schutzwirkung und Ernährungsfunktion der Milch erlaubt.

Allgemein ist es noch bevorzugt, wenn die Milch bezüglich ihrer Temperatur überwacht wird.

Auf diese Weise ist es möglich, die Verweildauer in den einzelnen Wärmequellen im Rahmen einer Rückkopplung zu regeln, so daß nicht zwingend mit fest voreingestellten Zeiten gearbeitet werden muß. Dies hat z.B. dann Vorteile, wenn Milch unterschiedlicher Menge und unterschiedlicher Konsistenz nacheinander gemäß dem neuen Verfahren behandelt werden soll. Das Verfahren sowie die Vorrichtung adaptieren sich auf diese Weise sozusagen automatisch an die jeweils zu behandelnde Milchmenge.

Bei der neuen Vorrichtung ist es noch bevorzugt, wenn sie eine horizontal und vertikal verfahrbare Aufnahme für den Behälter umfaßt, die einen rotierenden Antrieb für den Behälter aufweist, wobei vorzugsweise an der Aufnahme eine Rasthalterung für den Behälter, weiter vorzugsweise für einen Kolbenhals eines Glaskolbens vorgesehen ist. Der Temperaturfühler ist dabei nicht mitrotierend, vorzugsweise federnd an der Aufnahme befestigt.

Durch die Rasthalterung ist ein schnelles Montieren und Demontieren des Glaskolbens in der Vorrichtung möglich. Infolge des nicht mitrotierend angeordneten Temperaturfühlers wird die Temperatur der Milch nicht nur an einer Stelle im Behälter, sondern über dem gesamten Umfang des Behälters gemessen, was zu einer Temperaturmittelung führt. Wegen der federnden Anordnung des Temperaturfühlers an der Aufnahme ist vorteilhafterweise sichergestellt, daß es zu keinen Beschädigungen des Temperaturfühlers kommt, wenn dieser an der Behälterinnenwand anliegt und der rotierende Behälter nicht exakt rotationssymmetrisch ist.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

In den Figuren sind Ausführungsbeispiele der erfindungsgemäßen Vorrichtung gezeigt. Es zeigen:
- Fig. 1: ein erstes Ausführungsbeispiel der neuen Vorrichtung in stark schematischer Seitenansicht;
- Fig. 2: ein zweites Ausführungsbeispiel der neuen Vorrichtung in Seitenansicht;
- Fig. 3: eine vergrößerte Seitenansicht einer Aufnahme für einen Glaskolben; und
- Fig. 4: eine schematische Seitenansicht eines bei den Vorrichtungen der Fig. 1 und 2 verwendbaren Luftbades.

### Beispiel 1: Kurzzeithitzeinaktivierung von Muttermilch

Nativmilch von stillenden, CMV-seronegativen Müttern wird abgepumpt und in 20 ml-Proben aliquotiert. Zu dieser Probe wird eine definierte Virusmenge vom Virusstamm CMV AD 169 zugesetzt, um Milchproben mit definierter Viruslast herzustellen.

Zu diesem Zweck wurden zwei virushaltige Lösungen erzeugt, die von einem Kulturüberstand nach Zentrifugation 1000 x g ausgehen:
a) 5 ml des Kulturüberstandes werden direkt bei -70°C kryokonserviert.
b) Der Kulturüberstand wird in 1,5 ml-Hütchen gegeben und nach einer Viruspelletierung (30 min bei 25000 x g) 1,4 ml Überstand verworfen. Das Pellet wird jeweils in 100 µl Überstand resuspendiert, gepoolt und in 100 µl Proben ebenfalls bei -70°C kryokonserviert.

Für beide Lösungen betrug die TCID₅₀/100 µl (Tissue Culture Infective Dose 50 %), also die Verdünnungsstufe, bei der noch 50 % der angeimpften Mikrokulturen (mindestens acht Replika) einen positiven Virungsnachweis ergeben, jeweils 10^{-5.876}.

Darüber hinaus wurde die Muttermilch einer CMV-seropositiven stillenden Mutter getestet.

Die so erzeugten Proben werden zum einen in einer in der einzigen Figur gezeigten Vorrichtung 10 einer Kurzzeithitzebehandlung unterzogen.

Zu diesem Zweck umfaßt die Vorrichtung 10 zwei Wasserbäder 12 und 13, über denen sich auf zwei Pfosten 14, 15 abgestützt ein Portalbalken 16 erstreckt. An dem Portalbalken 16 ist verschiebbar ein Wagen 17 gelagert, der über einen Motor 18 in Richtung eines Doppelpfeiles 19 verfahrbar ist.

An dem Wagen 17 ist eine in Richtung eines Doppelpfeiles 20 höhenverstellbare Stange 21 vorgesehen, die in ihrer Hubbewegung über einen Motor 22 gesteuert wird, der ebenfalls an dem Wagen 17 gelagert ist.

An ihrem unteren Ende trägt die Stange 21 einen Drehhalter 23, in den ein Glaskolben 24 eingespannt ist. An ihrem oberen Ende weist die Stange 21 einen Motor 25 auf, über den der Glaskolben um seine Hochachse 26 in Rotation versetzt werden kann, was durch einen Pfeil 27 angedeutet ist.

An der Stange 21 ist ferner noch ein Temperaturfühler 28 befestigt, der in den Glaskolben 24 hineinragt und ggf. federnd an dessen Innenwand 29 anliegt.

In dem Glaskolben 24 befindet sich eine wie oben vorbereitete Probe zu behandelnder Muttermilch 32, die ein Volumen von ca. 20 ml aufweist, wobei bei 33 das Volumen im Stillstand des Glaskolbens 24 angedeutet ist.

Wenn der Glaskolben 24 durch den Motor 25 in Rotation versetzt wird, bildet die Muttermilch an der Innenwand 29 des Glaskolbens 24 einen bei 34 angedeuteten Milchfilm aus, der etwa die Hälfte der Innenwand 29 bedeckt. Diese Ausbildung des Milchfilmes wird dadurch erreicht, daß der Glaskolben 24 ca. das zehnfache Volumen wie die Muttermilch 32 aufweist, im vorgegebenen Fall ein Volumen von 250 ml (Glasrundhalskolben mit Schliff), der mit einer Drehzahl von ca. 300 U/min rotiert.

Über die Motoren 18 und 22 kann der Glaskolben 24 jetzt in eines der beiden Wasserbäder 12, 13 eingetaucht werden, wobei die Eintauchtiefe so gewählt wird, daß der Glaskolben 24 bis zu seinem Hals 35 in das Wasser des jeweiligen Wasserbades 12 oder 13 eingetaucht wird.

Die Ablaufsteuerung erfolgt über eine Steuerschaltung 36, mit der sowohl die Motoren 18, 22 und 25 als auch der Temperaturfühler 28 verbunden sind, der im Experimentierstadium die jeweilige Temperatur der Muttermilch anzeigt.

Es sei in diesem Zusammenhang erwähnt, daß beim Einsatz der neuen Vorrichtung in einer Klinik auf einen Temperaturfühler verzichtet werden kann, da eine Vielzahl von Experimenten erwiesen hat, daß bei vorgegebenen Temperaturen und Verweildauern der Temperaturverlauf in der Muttermilch 32 reproduzierbar ist. Der Verzicht auf den Temperaturfühler 28 hat darüber hinaus den Vorteil, daß keine besonderen Maßnahmen zur Sterilisierung des Temperaturfühlers verwendet werden müssen, um eine Kreuzkontamination zwischen nacheinander behandelten Milchproben zu verhindern. Der Glaskolben 24 kann darüber hinaus auf einfache Weise sterilisiert werden, so daß insgesamt die Gefahr der Kreuzkontamination vermieden wird.

Das neue Verfahren läuft nun derart ab, daß zunächst in einen frischen Glaskolben 24 die gewünschte Menge von Muttermilch, in dem gewählten Beispiel also 20 ml eingegeben wird. Der Glaskolben 24 wird dann in den Drehhalter 23 eingespannt und mittels des Motors 25 mit einer Drehzahl von ca. 300 U/min in Rotation versetzt, so daß sich der Milchfilm 34 ausbildet.

Dann wird durch Verfahren der Motoren 18 und 22 der Glaskolben 24 zum Zwecke des raschen Wärmeaustausches bis zu seinem Hals 35 in das Wasserbad 12 eingetaucht, das auf 85-90°C erhitzt ist.

Der Glaskolben 24 verbleibt für 20/25 Sekunden in dem Wasserbad 12 und wird dann automatisch wieder ausgehoben. Die Temperatur des Milchfilmes liegt dann bei 68/70°C.

Daraufhin wird der immer noch rotierende Glaskolben 24 für fünf Sekunden der Luft ausgesetzt, wobei durch den Wärmeaustausch mit der Umgebung der Milchfilm eine Zieltemperatur von ca. 72°C erreicht.

Danach wird der Glaskolben 24 dann in das Wasserbad 13 eingetaucht, das eine Temperatur von 2-4°C aufweist. Hier verbleibt der immer noch rotierende Glaskolben 24 für ca. 20 Sekunden, woraufhin die Muttermilch 32 wieder eine Temperatur von ca. 30°C eingenommen hat.

Der ganze Inaktivierungszyklus dauert also lediglich ca. eine Minute, so daß die neue Vorrichtung auch für Kliniken geeignet ist, wo viele individuelle Milchproben nacheinander und ohne Gefahr der Kreuzkontamination hitzeinaktiviert werden müssen. Da - wie bereits erwähnt - im Klinikalltag eventuell kein Temperaturfühler 28 erforderlich ist, bzw. der Temperaturfühler 28 nur zeitweise zur Überprüfung des Verfahrens verwendet wird, muß nach der Behandlung einer ersten Milchprobe lediglich der Glaskolben entnommen und durch einen neuen, mit einer neuen Milchprobe gefüllten Glaskolben ersetzt werden. Auf diese Weise können schnell nacheinander eine große Zahl von Milchproben inaktiviert werden.

Die so behandelten Milchproben werden dann in kleinen Gefäßen wie z.B. kleinen Milchfläschchen aufbewahrt, woraufhin die benutzten Glaskolben gereinigt und sterilisiert werden, so daß sie wieder einsetzbar sind.

Es sei noch erwähnt, daß bei einer anderen Milchmenge ein entsprechend größerer Glaskolben und/oder eine veränderte Drehzahl eingesetzt werden können, wobei sich die neuen Werte mit Hilfe des Temperaturfühlers jedoch leicht ermitteln lassen.

Die Vorrichtung 10 ist darüber hinaus nicht nur für den Einsatz in einer Klinik geeignet, sondern auch von Müttern zuhause einsetzbar. Darüber hinaus wird durch das Verfahren nicht nur die CMV-Infektiosität ausgeschlossen, auch andere infektiöse Mikroorganismen, wie z.B. Staphylococcus aureus, können inaktiviert werden.

Die Ergebnisse der beispielhaft durchführten Inaktivierungen werden unten in den Beispielen 4 und 5 wiedergegeben.

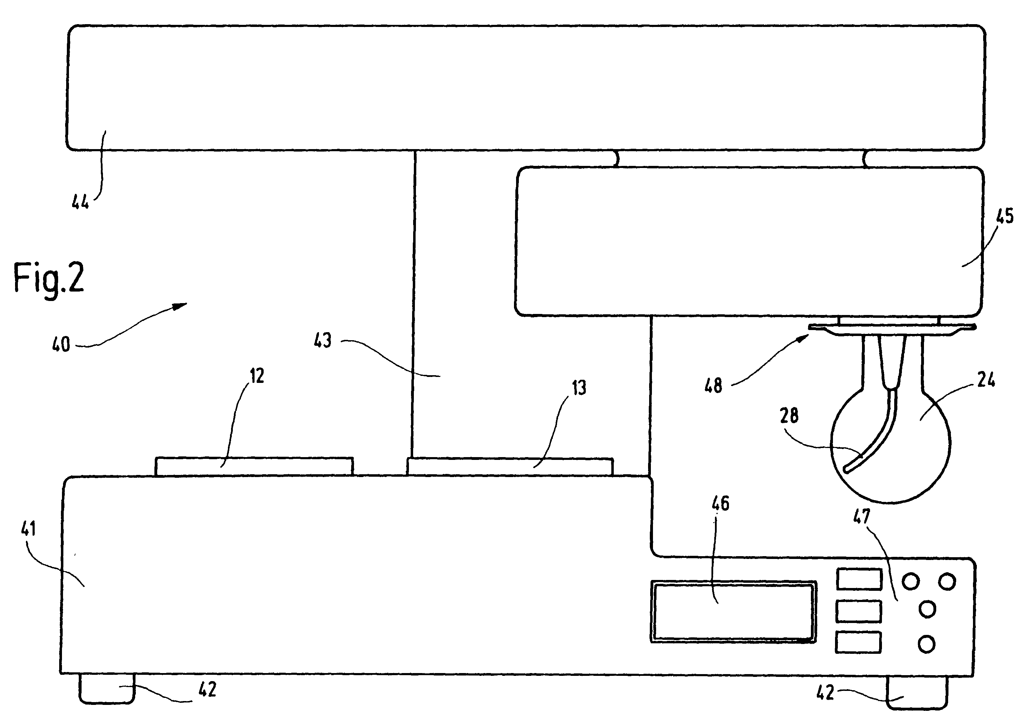

In Fig. 2 ist eine weitere Vorrichtung 40 gezeigt, die zur Behandlung von Milch geeignet ist.

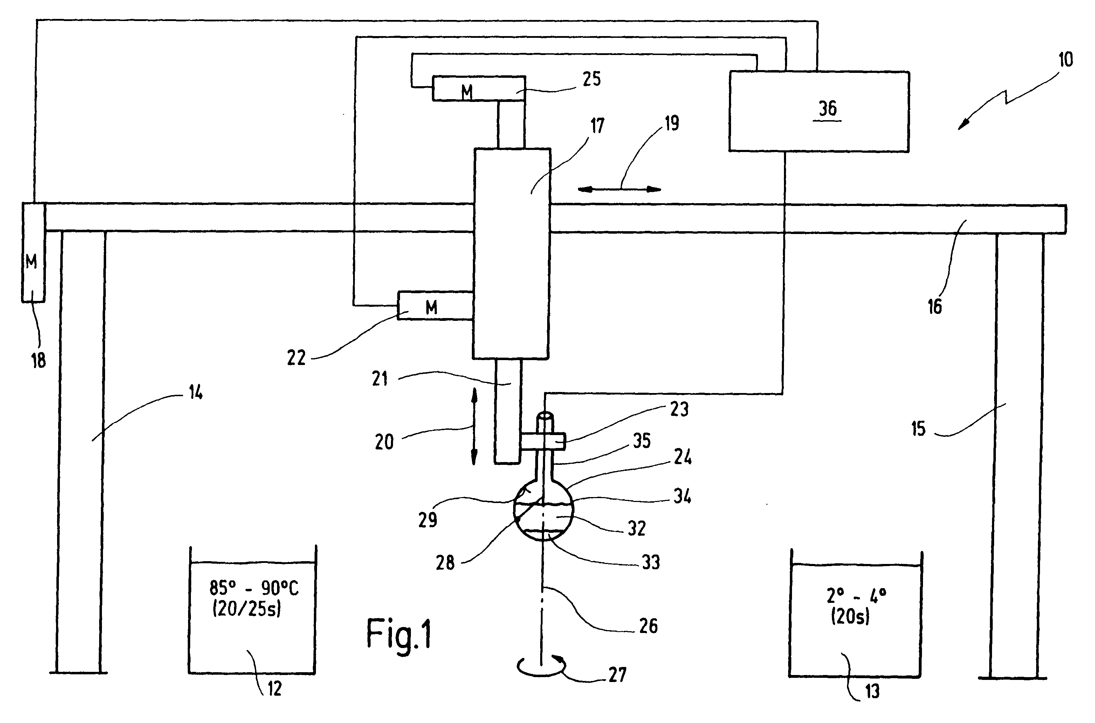

Die Vorrichtung 40 weist ein Grundgestell 41 mit Stellfüßen 42 auf. Am Grundgestell 41 ist eine Vertikalschiene 43 angeordnet, an der ein Querträger 44 vertikal beweglich gelagert ist. Parallel zum Querträger 44 ist ein Wagen 45 horizontal verfahrbar. An dem Wagen 45 ist der Glaskolben 24 derart befestigt, daß er in Rotation versetzt werden kann, wie es bereits im Zusammenhang mit Fig. 1 beschrieben wurde.

In das Grundgestell 11 sind die schon aus Fig. 1 bekannten Wasserbäder 12 und 13 integriert. Mit Hilfe des horizontal verfahrbaren Wagens 45 sowie des vertikal verfahrbaren Querträgers 44 kann der Glaskolben 24 nacheinander zuerst in das Wasserbad 12 und dann in das Wasserbad 13 eingetaucht werden. Zumindest im abgesenkten Zustand wird der Glaskolben 24 rotiert, so daß die Milch einen dünnen Film an der Innenwand des Glaskolbens 24 bildet, wodurch ein optimaler Temperaturübergang von den Wasserbädern 12, 13 zur Milch gewährleistet ist.

Im Grundgestell 41 ist außerdem eine Temperaturanzeige 46 integriert, auf der die mit dem Temperaturfühler 28 gemessene Temperatur angezeigt wird. Ferner ist in das Grundgestell 41 noch eine Bedieneinrichtung 47 integriert.

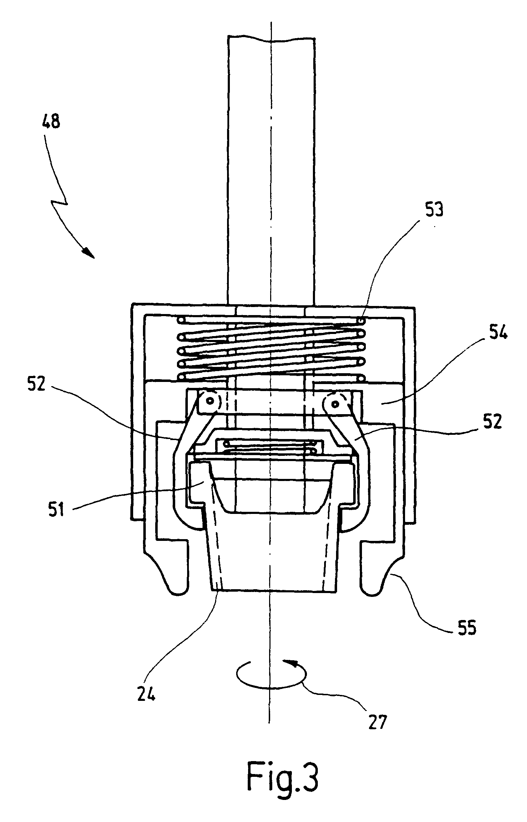

Der Glaskolben 24 ist an dem Wagen 45 mittels einer Aufnahme 48 befestigt, die in Fig. 3 im Ausschnitt gezeigt ist.

Die Aufnahme 48 erfaßt den Glaskolben 24, an dessen Halsbereich ein umlaufender Wulst 51 vorgesehen ist. Der Glaskolben 24 wird durch gelenkig gelagerte Klammern 52 gehalten, die den Wulst 51 übergreifen. Die Klammern 26 sind vertikal entgegen der Kraft einer Feder 53 bewegbar. Zur Befestigung des Glaskolbens 24 wird der Halsbereich mit dem Wulst 51 von unten gegen die Klammern 52 gefahren, die sich dadurch öffnen und den Wulst 51 aufnehmen und festspannen. In diesem Zustand wird die Aufnahme 48 längs des Pfeiles 27 in Rotation versetzt, wodurch sich auch der Glaskolben 24 dreht und der Milchfilm an der Innenwand des Glaskolbens ausgebildet wird.

Zum Herausnehmen des Glaskolbens 24 wird ein innerer Bereich 54, an dem die Klammern 52 gelenkig gelagert sind, entgegen der Kraft der Feder 53 nach oben gedrückt, indem mittels der Hand am Griffbereich 55 manipuliert wird. Durch die Bewegung des inneren Bereiches 54 nach oben öffnen sich die Klammern 52 und der Glaskolben 24 kann entnommen werden.

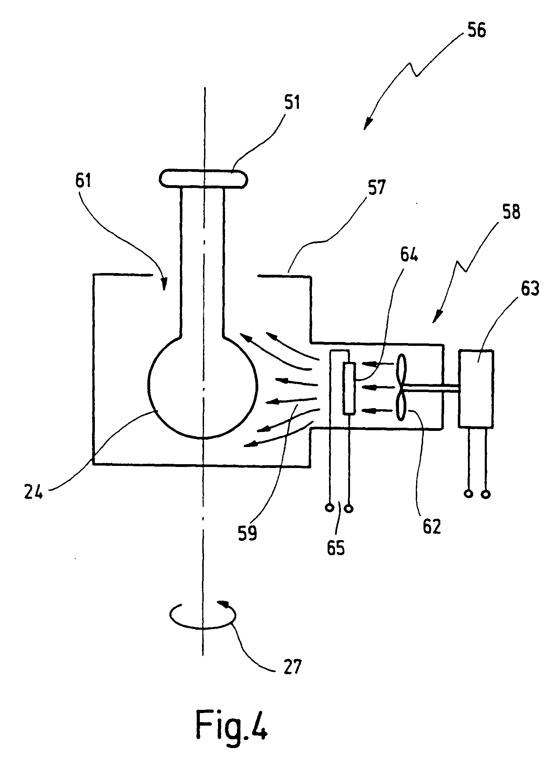

Statt der Wasserbäder 12, 13 kann als Wärmequelle auch ein Luftbad 56 verwendet werden, das in schematischer, geschnittener Seitenansicht in Fig. 4 dargestellt ist. Das Luftbad 56 umfaßt eine Kammer 57, an die eine Luftquelle 58 angeschlossen ist, die einen Luftstrahl 59 in das Innere der Kammer 57 leitet.

In der Kammer 57 ist eine obere Öffnung 61 vorgesehen, durch die hindurch der Glaskolben 24 in die Kammer 57 und damit in den Luftstrahl 59 eingetaucht werden kann.

Die Luftquelle 58 umfaßt einen Lüfter 62, der zusammen mit einem Motor 63 ein Gebläse bildet, daß den Luftstrom 59 über ein Temperaturglied 64 leitet, das über Anschlüsse 65 mit Strom versorgt wird.

Das Temperaturglied 64 ist entweder ein Heizwiderstand oder ein Pelltierelement, so daß das Luftbad 56 das Wasserbad 12 und/oder das Wasserbad 13 ersetzen kann.

### Beispiel 2: Holder-Pasteurisierung

Zum Vergleich wurden Proben, wie sie auch im Beispiel 1 verwendet wurden, einer Holder-Pasteurisierung unterzogen, also jeweils für 30 Minuten auf 62,5°C erhitzt.

Die in den Beispielen 4 und 5 wiedergegebenen Ergebnisse zeigen, daß auch durch diese Holder-Pasteurisierung jegliche Virusinfektion eliminiert wird, die Holder-Pasteurisierung führt jedoch zu einer deutlichen Reduktion des Laktoferrins, wobei verglichen mit der Kurzzeithitzeinaktivierung aus Beispiel 1 die Lipaseaktivität, der eine Schlüsselrolle bei der Fettresorption im Frühgeborenenintestinum zugeschrieben wird, ca. um den Faktor 3 geringer ist.

### Beispiel 3: Kryoinaktivierung

Als weiterer Vergleich wurde mit Proben wie in den Beispielen 1 und 2 eine Kryoinaktivierung durchgeführt, die Proben wurden für 18 h/3d/10d bei -20°C gelagert.

Die von den Erfindern der vorliegenden Anmeldung gemessene Rate der verbleibenden Infektiosität war auch bei zehntägiger Lagerung bei -20°C immer noch 20 %, was deutlich höher ist als in der Literatur beschrieben. Die Erfinder der vorliegenden Anmeldung führen dies darauf zurück, daß es den Meßmethoden bei den in der früheren Literatur beschriebenen Verfahren noch an der heute erreichbaren Empfindlichkeit gefehlt hat.

### Beispiel 4: Überprüfung der Inaktivierung

Zum Nachweis der CMV-Infektiosität, der CMV-DNA und der CMV-RNA wird die Milch nach der Inaktivierung fraktioniert und für den Nachweis die zellfreie und fettarme Molkefraktion verwendet. Hamprecht et al., Detection of cytomegalovirus DNA in human milk cells and cell free milk whey by nested PCR, Journal of Virological Methods, 1998, Band 70, Seiten 167-176, beschreiben den Vorteil der Verwendung der Molkefraktion gegenüber der behandelten Nativmilch dahingehend, daß die Zytotoxizität der Nativmilch in Zellkultur die Meßergebnisse verfälscht.

Aus diesem Grund wurde für die Überprüfung der Inaktivierung die Molkepräparation nach Hamprecht et al., 1998, wie folgt verwendet:

1-2 ml der Muttermilch wird bei 400 x g für 10 Minuten bei Raumtemperatur zentrifugiert, die cremige Deckschicht wird verworfen und der trübe Überstand wird erneut bei 400 x g für 10 Minuten zentrifugiert. Danach werden Zelltrümmer des Überstandes durch Zentrifugation bei 3200 x g für 10 Minuten gesammelt und der sich ergebende Überstand durch einen Filter mit 0,22 µm Porengröße (Sartorius) gefiltert. Die gefilterte Molke wird für in vitro Zellkulturassays verwendet.

Als Zellen werden humane Vorhautfibroblasten (HFF) eingesetzt mit einer Adhärenzzeit von 4-5 Stunden. Als Kulturträger dienen Mikrotiterplatten mit 2,5 x 10⁴ HFF/Mikrokultur/100 µl MEM-5 % FCS als Medium. Je Probe wurden acht Replika eingesetzt.

Je 100 µl der individuellen Molkepräparation wurden zur Probeninokulation verwendet, die Adsorptionszeit betrug 2 h.

Vier Mikrokulturen wurden zum Nachweis von CMV-IEA (Immediate Early Gene Antigen; Phosphoprotein pp72) eingesetzt. Dieses Virusantigen wird zum Nachweis der Virusinfektiosität verwendet, es ist bereits 2-4 Stunden nach Virusinfekt in Fibroblasten Zellkernen nachweisbar.

Vier weitere Mikrokulturen dienten zum Nachweis von später CMV-RNA pp67 mRNA mittels einer Nucleic Acid Sequence-based Amplification, kurz NASBA, wie beschrieben von Compten, Nature, 350: 91-92, 1991. Durch dieses Verfahren ist es möglich, RNA in Gegenwart von DNA zu amplifizieren.

Nach einer Kurzzeit-Kultur (18 Stunden) lassen sich singuläre, diffus verteilte infizierte Zellkerne in der Mikrokultur nachweisen, sofern eine Infektion vorhanden ist.

Bei einer Langzeitkultur (5 d) bilden infizierte Zellkerne Plaques aus, die sich aus jeweils einer infizierten Fibroblastenzelle entwickeln.

Die nachfolgende Tabelle 1 zeigt die Ergebnisse der Versuche aus den Beispielen 1-3 jeweils unter Angabe des Titers der Viruslösung, der Art der Inaktivierung, der Dauer des Zellkulturassays, der Anzahl der infizierten Zellen, der nachgewiesenen IE-DNA sowie der nachgewiesenen pp67 m-RNA, die im Gegensatz zur CMV-Infektion für eine CMV-Erkrankung steht.

**Tabelle 1:**

| Ausgewählte Versuchsergebnisse zu den Beispielen 1-3 | | | | | | |
|---|---|---|---|---|---|---|
| TCID₅₀/100 µl | Probe | Inaktivierung | Assay | IEA+/Gesamt | IE-DNA | pp67 mRNA |
| 10⁵ | ZK-Kontrolle | - | 15 h | 76/76 | ./. | ./. |
| | Molke spiked | - | 15 h | 22/103 | ./. | ./. |
| | Molke spiked | 10" 72°C | 15 h | 0/116 | ./. | ./. |
| Spender | Molke | - | 5d | 4/104 | ./. | ./. |
| CMV- | Molke | 10" 72°C | 5d | 0/120 | ./. | ./. |
| seropositiv | Molke | 20" 72°C | 5d | 0/124 | ./. | ./. |
| 10⁴ | ZK-Kontrolle | - | 6d | - | + | + |
| | Molke spiked | - | 6d | Konfl.Plaques | + | + |
| | Molke spiked | 5" 72°C | 6d | ∅/well | + | - |
| | Molke spiked | 10" 72°C | 6d | ∅/well | + | - |
| | Molke spiked | 30' 62°C | 6d | ∅/well | + | - |
| 10³ | ZK-Kontrolle | - | 6d | - | + | + |
| | Molke spiked | - | 6d | 6 Plaques/well | + | + |
| | Molke spiked | 5" 72°C | 6d | ∅/well | + | - |
| | Molke spiked | 10" 72°C | 6d | ∅/well | + | - |
| 10⁴ | ZK-Kontrolle | - | 5d | 324/324 | ./. | ./. |
| | Molke spiked | - | 5d | 24/77 | ./. | ./. |
| | Molke spiked | 3d-20°C | 5d | 45/333 | ./. | ./. |
| | Molke spiked | 10d-20°C | 5d | 73/361 | ./. | ./. |
| 10⁴ | ZK-Kontrolle | - | 18h | - | ./. | ./. |
| | Molke spiked | 18h-20°C | 18h | 220/well | ./. | ./. |
| ZK-Kontrolle = Zellkultur- Kontrolle (ohne Probe) | | | | | | |
| Molke spiked = mit CMV AD 169 versetzte Molke | | | | | | |

Sowohl bei der Holder-Pasteurisierung als auch bei der erfindungsgemäßen Kurzzeithitzeinaktivierung sind im Gegensatz zur Kryoinaktivierung weder Virusantigen (IEA) noch späte Virus-RNA (pp67 mRNA) mit der sehr empfindlichen NASBA-Methode nachweisbar. Virus-DNA wird jedoch nachgewiesen, deutet jedoch nicht auf eine verbleibende Infektion sondern lediglich auf die Hitzestabilität der viralen DNA hin.

Dies bedeutet, daß durch die Kurzzeitinaktivierung die Infektiosität effektiv eliminiert wird.

### Beispiel 5: Biochemische Parameter

Zur Charakterisierung der in den Beispielen 1 bis 3 beschriebenen Inaktivierungsverfahren wurden zusätzliche biochemische Parameter erfaßt, die Ergebnisse sind in der nachfolgenden Tabelle 2 angegeben.

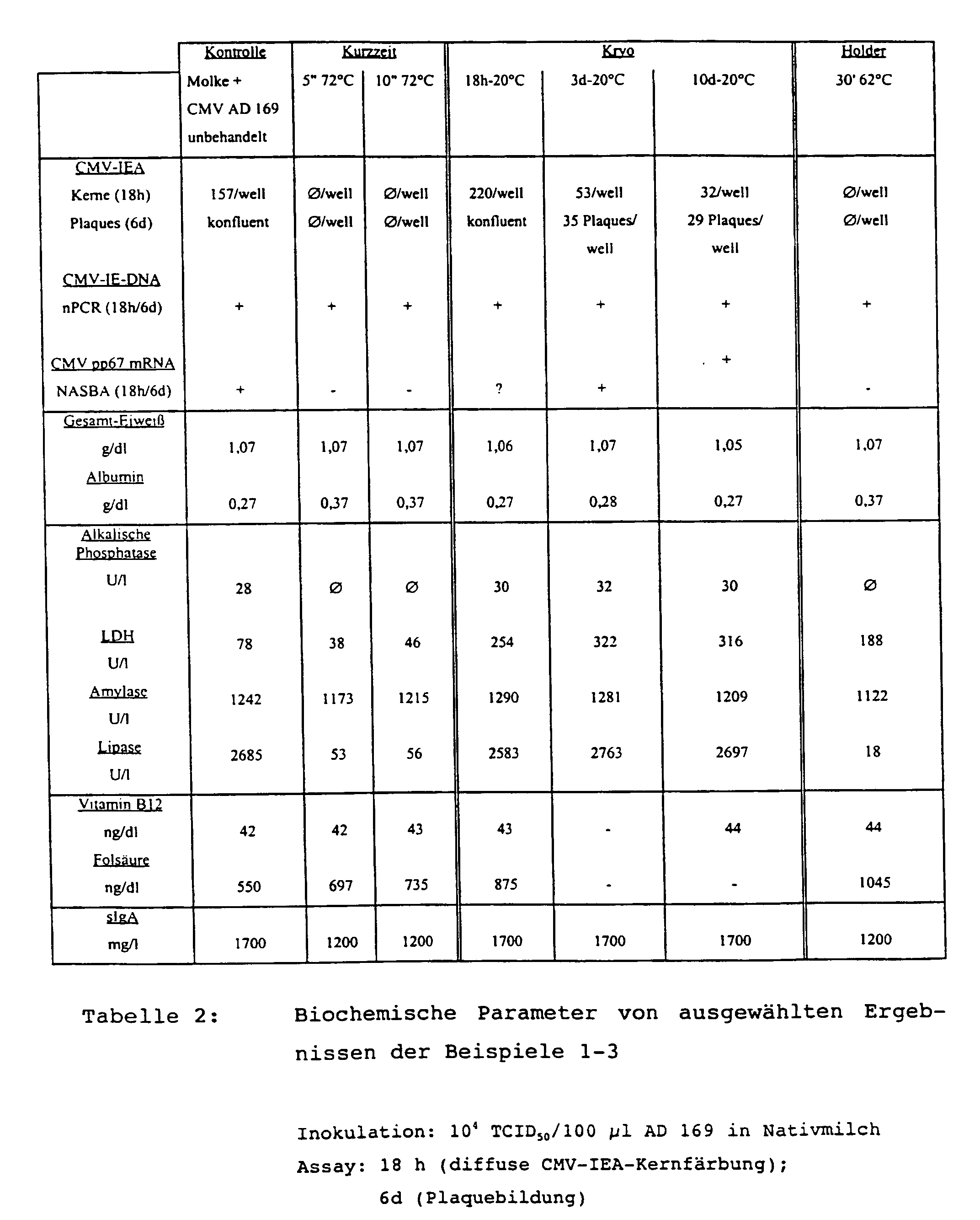

Das Kurzzeithitzeinaktivierungsverfahren zeigt keine Reduktion des Gesamteiweisses und des Albumins in der Molke an. Temperatursensitiv ist dagegen die Aktivität der Alkalischen Phosphatase und der Lipase. Die Lipaseaktivität, der eine Schlüsselrolle bei der Fettresorption im Frühgeborenenintestinum zugeschrieben wird, ist jedoch bei dem neuen Verfahren ca. um den Faktor 3 größer als nach der Holder-Pasteurisierung. Der Lipaseaktivität wird ferner eine wichtige antivirale Schutzwirkung zugeschrieben, so daß das neue Verfahren deutliche Vorteile gegenüber der Holder-Pasteurisierung aufweist.

Die Konzentration der Vitamine B12 und Folsäure wird durch das neue Verfahren nicht reduziert. Ferner zeigt sich, daß sIgA weitgehend hitzestabil ist, jedoch durch beide Hitzeinaktivierungsschritte geringfügig reduziert wird. Die Kryoinaktivierung beeinflußt den sIgA-Spiegel dagegen nicht.

## Patentansprüche

1. Verfahren zur Behandlung von Milch, insbesondere von Muttermilch (32), bei dem die Milch in einem Behälter kurzzeitig erhitzt wird, der Behälter zumindest während des Erhitzens derart in Bewegung gesetzt wird, daß sich an seiner Innenwand (29) ein Milchfilm (32) ausbildet, der Behälter/die Milch zum Aufheizen für eine erste Zeitspanne einer auf eine erste Temperatur eingestellten ersten Wärmequelle, dann für eine zweite Zeitspanne einer auf einer zweiten Temperatur befindlichen zweiten Wärmequelle und schließlich zum Abkühlen für eine dritte Zeitspanne einer auf eine dritte Temperatur eingestellten dritten Wärmequelle ausgesetzt wird,
**dadurch gekennzeichnet, daß** die erste Wärmequelle durch eine Heißluftquelle gebildet wird.

2. Verfahren nach Anspruch 1, **dadurch gekennzeichnet, daß** die zweite Wärmequelle die Umgebungsluft ist.

3. Verfahren nach Anspruch 1 oder 2, **dadurch gekennzeichnet, daß** die dritte Wärmequelle durch ein gekühltes Wasserbad gebildet wird.

4. Verfahren nach einem der Ansprüche 1 bis 3, **dadurch gekennzeichnet, daß** der bewegte Behälter in einen Luftstrahl (59) der ersten Wärmequelle eingetaucht wird.

5. Verfahren nach Anspruch 4, **dadurch gekennzeichnet, daß** der Luftstrahl (59) in eine Kammer (57) mit einer Öffnung (61) zum Eintauchen des bewegten Behälters geleitet wird.

6. Verfahren nach einem der Ansprüche 1 bis 5, **dadurch gekennzeichnet, daß** die dritte Wärmequelle eine Temperatur aufweist, die kleiner als 10 °C ist.

7. Verfahren nach einem der Ansprüche 1 bis 6, **dadurch gekennzeichnet, daß** die erste Zeitspanne größer als 15 Sekunden ist.

8. Verfahren nach einem der Ansprüche 1 bis 7, **dadurch gekennzeichnet, daß** die zweite Zeitspanne kleiner als 15 Sekunden ist.

9. Verfahren nach einem der Ansprüche 1 bis 8, **dadurch gekennzeichnet, daß** die dritte Zeitspanne größer als 10 Sekunden ist.

10. Verfahren nach einem der Ansprüche 1 bis 9, **dadurch gekennzeichnet, daß** der Behälter mit einer Drehzahl oberhalb von ca. 150 U/min, vorzugsweise oberhalb von ca. 250 U/min, weiter vorzugsweise von ca. 300 U/min in Rotation versetzt wird.

11. Verfahren nach einem der Ansprüche 1 bis 10, **dadurch gekennzeichnet, daß** der Behälter ein Glaskolben (24), vorzugsweise ein Glasrundkolben ist.

12. Verfahren nach einem der Ansprüche 1 bis 11, **dadurch gekennzeichnet, daß** der Behälter ein Volumen aufweist, das mindestens ca. zehnmal größer ist als das Volumen der Milch.

13. Verfahren nach einem der Ansprüche 1 bis 12, **dadurch gekennzeichnet, daß** die Milch bezüglich ihrer Temperatur überwacht wird.

14. Vorrichtung zur Behandlung von Milch, vorzugsweise von Muttermilch (32), in der die Milch in einem Behälter kurzzeitig erhitzt wird, mit zumindest einer ersten Wärmequelle zum Aufheizen der Milch und einer Vorrichtung, um den Behälter in Bewegung zu versetzen und den sich bewegenden, vorzugsweise rotierenden Behälter der Wärmequelle für eine bestimmte Zeitspanne auszusetzen, und einer weiteren Wärmequelle zum Abkühlen der Milch,
**dadurch gekennzeichnet, daß** die erste Wärmequelle durch eine Heißluftquelle gebildet ist.

15. Vorrichtung nach Anspruch 14, **dadurch gekennzeichnet, daß** die weitere Wärmequelle durch ein gekühltes Wasserbad gebildet ist.

16. Vorrichtung nach Anspruch 14 oder 15, **dadurch gekennzeichnet, daß** die Heißluftquelle ein Luftbad (56) ist, in dessen Luftstrahl (59) der sich bewegende, vorzugsweise rotierende Behälter durch die Vorrichtung eintauchbar ist.

17. Vorrichtung nach Anspruch 16, **dadurch gekennzeichnet, daß** das Luftbad (56) eine Kammer (57) umfaßt, in die der Luftstrahl (59) eingeleitet wird, und die eine Öffnung (61) zum Eintauchen des Behälters aufweist.

18. Vorrichtung nach einem der Ansprüche 14 bis 17, **gekennzeichnet durch** einen in die Milch ragenden Temperaturfühler (28).

19. Vorrichtung nach einem der Ansprüche 14 bis 18, **gekennzeichnet durch** eine horizontal und vertikal verfahrbare Aufnahme (23, 48) für den Behälter, die einen rotierenden Antrieb (25) für den Behälter aufweist.

20. Vorrichtung nach Anspruch 19, **dadurch gekennzeichnet, daß** die Aufnahme (48) eine Rasthalterung (52, 53, 54) für den Behälter, vorzugsweise für einen Kolbenhals eines Glaskolbens (42) aufweist.

21. Vorrichtung nach Anspruch 20, **dadurch gekennzeichnet, daß** der Temperaturfühler (28) nicht mitrotierend in der Aufnahme (48) befestigt ist.

22. Vorrichtung nach Anspruch 20 oder 21, **dadurch gekennzeichnet, daß** der Temperaturfühler (28) federnd an der Aufnahme (48) befestigt ist.

## Claims

1. A method for treating milk, especially breast milk (32), in which the milk is short-term heated in a container, said container is set in motion, at least during the heating, in such a way that a milk film (32) forms on its inner wall (29), said container/the milk is exposed for the heating to a first heat source which is set at a first temperature, for a first period of time, then to a second heat source which is at a second temperature, for a second period of time, and finally for cooling to a third heat source which is set at a third temperature, for a third period of time,
**characterized in that** said first heat source is a hot air source.

2. The method as in claim 1, **characterized in that** said second heat source is the ambient air.

3. The method as in claim 1 or 2, **characterized in that** said third heat source is a cooled waterbath.

4. The method as in any of claims 1 to 3, **characterized in that** said container in motion is immersed in an air stream (59).

5. The method as in claim 4, **characterized in that** said air stream (59) is passed into a chamber (57) with an opening (61) for immersion of the container in motion.

6. The method as in any of claims 1 to 5, **characterized in that** said third heat source has a temperature which is below 10°C.

7. The method as in any of claims 1 to 6, **characterized in that** said first period of time is more than 15 seconds.

8. The method as in any of claims 1 to 7, **characterized in that** said second period of time is less than 15 seconds.

9. The method as in any of claims 1 to 8, **characterized in that** said third period of time is more than 10 seconds.

10. The method as in any of claims 1 or 9, **characterized in that** said container is set in rotation with a speed of rotation greater than about 150 rpm, preferably greater than about 250 rpm, more preferably of about 300 rpm.

11. The method as in any of claims 1 to 10, **characterized in that** said container is a glass flask (24), preferably a round-bottom glass flask.

12. The method as in any of claims 1 to 11, **characterized in that** said container has a volume which is at least about ten times larger than the volume of the milk.

13. The method as in any of claims 1 to 12, **characterized in that** the temperature of the milk is monitored.

14. A device for treating milk, preferably breast milk (32), in which the milk is short-term heated in a container, comprising at least one first heat source for heating the milk and a device for setting the container in motion and exposing the container which is in motion, preferably rotating, to said heat source for a defined period of time, and another heat source for cooling the milk,
**characterized in that** said first heat source is a hot air source.

15. The device as in claim 14, **characterized in that** said other heat source is a cooled waterbath.

16. The device as in claim 14 or 15, **characterized in that** said heat source is an air bath (56) into whose air stream (59) said container which is in motion, preferably rotating, can be immersed by said device.

17. The device as in claim 16, **characterized in that** said air bath (56) comprises a chamber (57) into which the air stream (59) is passed and which has an opening (61) for immersion of said container.

18. The device as in any of claims 14 to 17, **characterized by** a temperature sensor (28), projecting into the milk.

19. The device as in any of claims 14 to 18, **characterized by** a receptacle (23, 48) for said container, which receptacle is capable of horizontal and vertical movement and has a rotating drive (25) for said container.

20. The device as in claim 19, **characterized in that** said receptacle (48) has a locking securement means (52, 53, 54) for said container, preferably for a neck of a glass flask (42).

21. The device as in claim 20, **characterized in that** said temperature sensor (28) is fastened non-corotatingly in said receptacle (48).

22. The device as in claim 20 or 21, **characterized in that** the temperature sensor (28) is fastened resiliently to said receptacle (48).

## Revendications

1. Procédé de traitement de lait, en particulier de lait maternel (32), dans lequel le lait est brièvement chauffé dans un récipient, le récipient étant mis en mouvement au moins pendant qu'il est chauffé, de manière qu'il se forme une pellicule de lait (32) sur sa paroi intérieure (29), le récipient/le lait étant exposé, pour le chauffage, pendant un premier intervalle de temps, à une première source de chaleur réglée à une première température, puis pendant un deuxième intervalle de temps à une deuxième source de chaleur se trouvant à une deuxième température, et enfin, pour le refroidissement, pendant un troisième intervalle de temps à une troisième source de chaleur réglée à une troisième température,
**caractérisé en ce que** la première source de chaleur est formée par une source d'air chaud.

2. Procédé selon la revendication 1, **caractérisé en ce que** la deuxième source de chaleur est l'air ambiant.

3. Procédé selon la revendication 1 ou 2, **caractérisé en ce que** la troisième source de chaleur est formée par un bain d'eau refroidie.

4. Procédé selon l'une des revendications 1 à 3, **caractérisé en ce que** le récipient en mouvement est immergé dans un jet d'air (59) de la première source de chaleur.

5. Procédé selon la revendication 4, **caractérisé en ce que** le jet d'air (59) est guidé dans une chambre (57) présentant une ouverture (61) pour l'immersion du récipient en mouvement.

6. Procédé selon l'une des revendications 1 à 5, **caractérisé en ce que** la troisième source de chaleur présente une température inférieure à 10°C.

7. Procédé selon l'une des revendications 1 à 6, **caractérisé en ce que** le premier intervalle de temps est supérieur à 15 secondes.

8. Procédé selon l'une des revendications 1 à 7, **caractérisé en ce que** le deuxième intervalle de temps est inférieur à 15 secondes.

9. Procédé selon l'une des revendications 1 à 8, **caractérisé en ce que** le troisième intervalle de temps est supérieur à 10 secondes.

10. Procédé selon l'une des revendications 1 à 9, **caractérisé en ce que** le récipient est mis en rotation à une vitesse de rotation supérieure à environ 150 tours/mn, de préférence supérieure à environ 250 tours/mn, de préférence encore d'environ 300 tours/mn.

11. Procédé selon l'une des revendications 1 à 10, **caractérisé en ce que** le récipient est un ballon en verre (24), de préférence un ballon rond en verre.

12. Procédé selon l'une des revendications 1 à 11, **caractérisé en ce que** le récipient présente un volume qui est au moins environ 10 fois supérieur au volume du lait.

13. Procédé selon l'une des revendications 1 à 12, **caractérisé en ce que** la température du lait est surveillée.

14. Dispositif de traitement de lait, de préférence de lait maternel (32), dans lequel le lait est brièvement chauffé dans un récipient, comportant au moins une première source de chaleur pour chauffer le lait et un dispositif pour mettre en mouvement le récipient et soumettre le récipient en mouvement, de préférence tournant, à la source de chaleur, pendant un intervalle de temps déterminé, et à une autre source de chaleur pour refroidir le lait,
**caractérisé en ce que** la première source de chaleur est formée par une source d'air chaud.

15. Dispositif selon la revendication 14, **caractérisé en ce que** l'autre source de chaleur est formée par un bain d'eau refroidie.

16. Dispositif selon la revendication 14 ou 15, **caractérisé en ce que** la source d'air chaud est un bain d'air (56) dans le jet d'air (59) duquel on peut immerger le récipient en mouvement, de préférence tournant, à travers le dispositif.

17. Dispositif selon la revendication 16, **caractérisé en ce que** le bain d'air (56) comprend une chambre (57) dans laquelle est introduit le jet d'air (59), et qui présente une ouverture (61) pour immerger le récipient.

18. Dispositif selon l'une des revendications 14 à 17, **caractérisé par** une sonde de température (28) pénétrant dans le lait.

19. Dispositif selon l'une des revendications 14 à 18, **caractérisé par** un logement (23, 48), déplaçable horizontalement et verticalement, pour le récipient, lequel logement comporte un dispositif d'entraînement en rotation (25) pour le récipient.

20. Dispositif selon la revendication 19, **caractérisé en ce que** le logement (48) comporte une fixation à encliquetage (52, 53, 54) pour le récipient, de préférence pour le col d'un ballon en verre (42).

21. Dispositif selon la revendication 20, **caractérisé en ce que** la sonde de température (28) est fixée dans le logement (48), de manière à ne pas tourner avec celui-ci.

22. Dispositif selon la revendication 20 ou 21, **caractérisé en ce que** la sonde de température (28) est fixée de manière élastique sur le logement (48).
